# EUROPÄISCHE PATENTANMELDUNG

(11) **EP 1 347 325 A1**
(43) Veröffentlichungstag der Anmeldung: **24.09.2003**
(21) Anmeldenummer: 03005099.1
(22) Anmeldetag: 07.03.2003
(51) Int. Cl.: G02B 15/04

(54) **Objektiv zur Beobachtung eines Feuerraums**

(30) Priorität: 18.03.2002 DE 10211985
(71) Anmelder: Sobotta GmbH Sondermaschinenbau, 53819 Neunkirchen-Seelscheid (DE)
(72) Erfinder: Sobotta, Kurt, Dipl.-Ing., 53819 Neunkirchen-Seelscheid (DE)
(74) Vertreter: Radünz, Ingo, Dipl.-Ing.

(57) **Zusammenfassung**

Ein Objektiv, insbesondere ein Feuerraumobjektiv zur Bildübertragung in Feuerräumen besteht aus einem Objektivkörper (1), in dem ein Okular (5) sowie ein Umkehrsystem (4) und ein Objektivkopf (3) montiert sind. Der Objektivkopf (3) und das Umkehrsystem (4) sind auswechselbar in den Objektivkörper (1) eingesetzt. Jedem Objektiv sind Objektivköpfe (3) mit unterschiedlichen Linsensystemen für bestimmte Bildwinkelaufnahmen und Umkehrsysteme (4) mit Linsensystemen für bestimmte Bildwinkelaufnahmen zugeordnet. Die gesamte Baulänge des Objektivs von dem Okular (5) über das jeweils eingesetzte Umkehrsystem (4) bis zur Vorderkante des jeweils eingesetzten Objektivkopfes (3) ist konstant. (Fig. 1)

## Beschreibung

Die Erfindung betrifft ein Objektiv, insbesondere ein Feuerraumobjektiv zur Bildübertragung in Feuerräumen mit den Merkmalen des Oberbegriffes des Anspruches 1.

Derartige Objektive werden als Feuerraumobjektive unter Zuhilfenahme einer elektronischen Kamera (CCD-Kamera) in den Wänden von Feuerräumen von Kraftwerken, Müllverbrennungsanlagen, Zementdrehöfen, Glasschmelzwannen, Stahlschmelztiegeln, Glühöfen und anderen installiert und dazu eingesetzt, um den Verbrennungsvorgang optisch zu überwachen.

Die Feuerraumkameras sind mit Spezialobjektiven ausgerüstet, bei denen der Brennpunkt vor der Frontlinse liegt. Dieser Umstand erlaubt es, das Feuerraumobjektiv und die elektronische Kamera in ein doppelwandiges, wassergekühltes Schutzgehäuse zu montieren (EP 0 949 501 A). Das Schutzgehäuse bildet mit den eingebauten Teilen die Feuerraumkamera. Durch eine etwa 3 mm große Ausblicköffnung in dem Schutzgehäuse kann die Feuerraumkamera das Objekt aufnehmen.

Die bekannten Objektive weisen für jeden Bildwinkel von 70° bis 110° jeweils eine bestimmte Baulänge auf, die bis zu 40 mm Längenunterschied haben. Möchte zum Beispiel ein Anwender seine Feuerraumkamera mit einem Bildwinkel von 70° auf einen Bildwinkel von 94° erweitern, um auf dem angeschlossenen Bildschirm einen größeren Ausschnitt aus dem Feuerraum zu sehen, muss er das Objektiv austauschen. Das ist unter Verwendung der bekannten Feuerraumkameras nur mit einem erheblichen Umbau an der Feuerraumkamera vorzunehmen, da die Objektive mit steigendem Bildwinkel immer kürzer bauen. Die Einschubkonstruktion für die Befestigung des verwendeten Feuerraumobjektives in dem Schutzgehäuse der Feuerraumkamera ist für jeden Bildwinkel immer eine andere und kann nicht sofort vor Ort geändert werden.

Der Erfindung liegt die Aufgabe zugrunde, das gattungsgemäße Objektiv derart zu gestalten, dass ein Wechsel der Objektivteile zur Anpassung an andere Bedingungen mit geringem Montageaufwand möglich wird.

Die Aufgabe wird bei einem gattungsgemäßen Objektiv erfindungsgemäß durch die kennzeichnenden Merkmale des Anspruches 1 gelöst. Vorteilhafte Ausgestaltungen der Erfindung sind Gegenstand der Unteransprüche.

Bei dem erfindungsgemäßen Objektiv bleibt die Baulänge konstant, gleichgültig auf welche Bildwinkelaufnahme die Linsenoptik ausgelegt ist. Das bedeutet, dass bei der Wahl eines anderen Bildwinkels kein Umbau an der Feuerraumkamera oder an der Einschubkonstruktion zur Halterung des Feuerraumobjektives in dem Schutzgehäuse der Feuerraumkamera vorgenommen werden muss.

Mehrere Ausführungsbeispiele der Erfindung sind in der Zeichnung dargestellt und werden im Folgenden näher erläutert. Es zeigen:
- Fig. 1: die Seitenansicht eines Feuerraumobjektives und
- Fig. 2: die Seitenansicht eines Feuerraumobjektives gemäß einer anderen Ausführungsform.

Das dargestellte Feuerraumobjektiv dient in Verbindung mit einer elektronischen Ship-Kamera der optischen Überwachung der Verbrennung in Feuerräumen. Zum Schutz gegen die Temperaturbelastung aus dem Feuerraum ist das Feuerraumobjektiv in ein wassergekühltes, z. B. in der EP 0 949 501 beschriebenes Schutzgehäuse eingebaut und durch eine Einschubkonstruktion gesichert. Zusammen mit dem Schutzgehäuse bilden das Feuerraumobjektiv und die Kamera eine Feuerraumkamera, die fest oder beweglich in die Begrenzungswand eines Feuerraumes eingebaut ist.

Das Feuerraumobjektiv besteht aus einem Objektivkörper 1, in dem die elektronische Blendenregelung 2 untergebracht ist. Im Inneren des Objektivkörpers 1 sind zwei Gewinderinge vorhanden. Dabei ist in dem einen Gewindering ein Okular 5 und in dem anderen Gewindering ein Umkehrsystem 4 eingeschraubt.

Auf das Umkehrsystem 4 ist ein Objektivkopf 3 geschraubt. Das Umkehrsystem 4 und der Objektivkopf 3 enthalten jeweils ein Linsensystem, das auf einen Bildwinkel von 70°, 94° oder 110° ausgelegt ist.

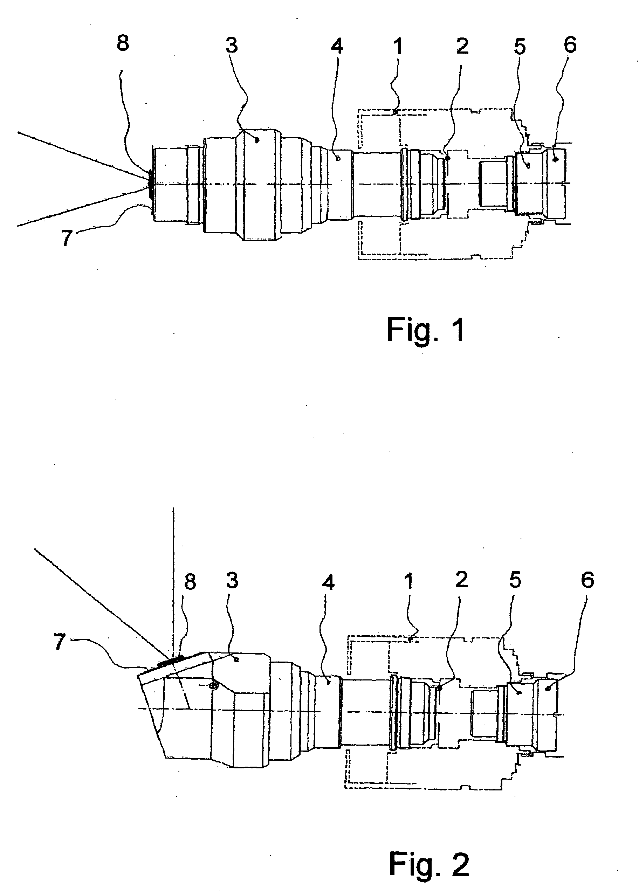

Der Objektivkopf 3 kann mit einem geraden Ausblick (Fig. 1) oder mit einem Schrägausblick von z. B. 70° zur Objektivachse (Fig. 2) versehen sein.

Das Okular 5 ist für eine Abbildung auf dem Bildaufnehmer der Feuerraumkamera ausgelegt. Das Okular 5 ist mit einem Gewinde versehen, auf das ein Filtergehäuse 6 zur Aufnahme von Filtern aufgeschraubt ist.

Auf dem Objektivkopf 3 ist vor der Frontlinse ein Schutzglas 8 mit Hilfe eines Spannringes 7 befestigt. Das Schutzglas 8 hält Staub und Schmutzteilchen von der Frontlinse fern. Durch Herausschrauben des Spannringes 7 lässt sich das Schutzglas 8 leicht entfernen und austauschen.

Dank der Verschraubung können der Objektivkopf 3 und das Umkehrsystem 4 auswechselbar in den Objektivkörper 1 eingesetzt werden. Der Objektivkopf 3 und das Umkehrsystem 4 sind modular aufgebaut. Sie sind für jede Baugruppe geometrisch gleich, wodurch die Baulänge des aus dem Objektivkopf 3 und dem Umkehrsystem 4 bestehenden Objektives für einen Bildwinkel von 70° die gleiche ist wie die Baulänge eines Objektives für einen Bildwinkel von 94° oder 110°. Das Okular 5 ist für alle Bildwinkel dasselbe, so dass die Baulänge der Feuerraumsonde zwischen dem Okular 5 und der Vorderkante des Objektivkopfes 3 stets die gleiche ist, gleichgültig auf welchen Bildwinkel das Objektiv ausgelegt ist.

Die modulare Bauweise von Objektivkopf 3 und Umkehrsystem 4 hat weiterhin den Vorteil, daß Bauteile, die auf unterschiedliche Bildwinkel ausgelegt sind, miteinander kombiniert werden können, um einen Zwischenwinkel zu erhalten. So ergibt die Paarung eines Umkehrsystemes 4 für einen Bildwinkel von 70° mit einem Objektivkopf 3 für einen Bildwinkel von 94° ein Objektiv für einen Bildwinkel von 82°. Die Kombination eines 94°-Umkehrsystemes 4 mit einem 110°-Objektivkopf 3 ergibt ein Objektiv für einen Bildwinkel von 102°.

## Patentansprüche

1. Objektiv, insbesondere Feuerraumobjektiv zur Bildübertragung in Feuerräumen, bestehend aus einem Objektivkörper (1), in dem ein Okular (5) sowie ein Umkehrsystem (4) und ein Objektivkopf (3) montiert sind, wobei der Objektivkopf (3) und das Umkehrsystem (4) auswechselbar in den Objektivkörper (1) eingesetzt und jedem Objektiv die Objektivköpfe (3) mit unterschiedlichen Linsensystemen für bestimmte Bildwinkelaufnahmen und die Umkehrsysteme (4) mit Linsensystemen für bestimmte Bildwinkelaufnahmen zugeordnet sind **dadurch gekennzeichnet, dass** die dem Objektiv zugeordneten Objektivköpfe (3) und Umkehrsysteme (4) modular aufgebaut sind und für unterschiedliche Linsensysteme jeweils gleich große Abmessungen aufweisen, so dass die gesamte Baulänge des Objektivs von dem Okular (5) über das jeweils eingesetzte Umkehrsystem (4) bis zur Vorderkante des jeweils eingesetzten Objektivkopfes (3) konstant ist.

2. Objektiv nach Anspruch 1, **dadurch gekennzeichnet, dass** der in den Objektivkörper (1) eingesetzte Objektivkopf (3) und das in den Objektivkörper (1) eingesetzte Umkehrsystem (4) auf dieselbe Bildwinkelaufnahme ausgelegt sind.

3. Objektiv nach Anspruch 1, **dadurch gekennzeichnet, dass** der in den Objektivkörper (1) eingesetzte Objektivkopf (3) und das in den Objektivkörper (1) eingesetzte Umkehrsystem (4) auf unterschiedliche Bildwinkelaufnahmen ausgelegt sind.

4. Objektiv nach einem der Ansprüche 1 bis 3, **dadurch gekennzeichnet, dass** vor der Frontlinse des Objektivkopfes (3) ein Schutzglas (8) auswechselbar befestigt ist.
